# EUROPÄISCHE PATENTSCHRIFT

(11) **EP 3 244 775 B1**
(45) Veröffentlichungstag und Bekanntmachung des Hinweises auf die Patenterteilung: **27.06.2018**
(21) Anmeldenummer: 15817050.6
(22) Anmeldetag: 23.11.2015
(51) Int. Cl.: E05F 1/16, A47B 88/467

(54) **MÖBELANTRIEB**
FURNITURE DRIVE
DISPOSITIF D'ENTRAINEMENT POUR MEUBLE

(30) Priorität: 02.01.2015 AT 42015
(43) Veröffentlichungstag der Anmeldung: 22.11.2017
(73) Patentinhaber: Julius Blum GmbH, 6973 Höchst (AT)
(72) Erfinder: FISCHER, Florian, 6973 Hoechst (AT); GOETZ, Christof, 6890 Lustenau (AT); MUSIC, Elvis, 88131 Lindau (DE)
(74) Vertreter: Torggler & Hofinger Patentanwälte
(86) Internationale Anmeldenummer: PCT/AT2015/000148
(87) Internationale Veröffentlichungsnummer: WO 2016/106434

(56) Entgegenhaltungen:
- WO-A1-2012/124706
- WO-A1-2013/094523
- US-A1- 2008 231 156

## Beschreibung

Die vorliegende Erfindung bezieht sich auf einen Möbelantrieb zum Einziehen eines bewegbar gelagerten Möbelteiles in eine Schließstellung relativ zu einem Möbelkorpus, umfassend:
- ein Gehäuse,
- einen Mitnehmer, der mit dem bewegbaren Möbelteil lösbar koppelbar ist,
- eine Federvorrichtung zur Kraftbeaufschlagung des Mitnehmers,
- wenigstens eine am Gehäuse angeordnete oder ausgebildete Führungsbahn, entlang welcher der Mitnehmer verfahrbar gelagert ist, wobei die Führungsbahn eine erste Abbiegung zur lösbaren Verriegelung des Mitnehmers aufweist.

Im Weiteren betrifft die Erfindung eine Anordnung mit einem Möbelantrieb der zu beschreibenden Art und mit einer Ausstoßvorrichtung zum Ausstoßen des bewegbaren Möbelteiles, durch die das bewegbare Möbelteil ausgehend von der Schließstellung in eine Offenstellung ausstoßbar ist. Ferner bezieht sich die Erfindung auf eine Schubladenausziehführung mit einem derartigen Möbelantrieb oder mit einer Anordnung der vorstehend genannten Art.

Möbelantriebe in Form von Einzugsvorrichtungen (beispielsweise wie aus der EP 391 221 B1 bekannt) kommen insbesondere mit Schubladen oder Schiebetüren zum Einsatz, die über einen Großteil ihres Auszugsbereiches frei verfahrbar sind und die erst gegen Ende der Schließbewegung vom Mitnehmer der Einzugsvorrichtung erfasst und durch Federkraft in die geschlossene Endlage eingezogen werden. Beim Öffnen des bewegbaren Möbelteiles muss ein Benutzer zunächst durch manuelle Zugausübung auf das bewegbare Möbelteil eine Kraft entgegen des Federwiderstandes aufbringen, bis der Mitnehmer nach einer vorgegebenen Wegstrecke in eine Abbiegung der Führungsbahn einfährt, wodurch dass bewegbare Möbelteil vom Mitnehmer entkoppelt wird. Der Mitnehmer ist durch die Abbiegung der Führungsbahn in einer selbsthemmend arretierten Parkposition lösbar verriegelt, wobei sich die Federvorrichtung in einem gespannten Zustand und damit in einer Bereitschaftsposition für den nächsten Einzugsvorgang befindet. Die Einzugsstrecke des bewegbaren Möbelteiles bis hin zur geschlossenen Endlage ist dabei konstant. Aus der prioritätsälteren, jedoch nachveröffentlichten AT 514666 A2 ist ein gattungsgemäßer Möbelantrieb bekannt geworden, wobei der Mitnehmer mit Stellmitteln versehen ist, mittels denen auswählbar ist, ob der Mitnehmer entlang von zumindest zwei unterschiedlich langen Führungsbahnen verfahrbar ist. Auf diese Weise ist eine Einstellung der Länge des Einzugsweges des Mitnehmers mit unterschiedlichen Federvorspannungen möglich. Als Stellmittel ist ein am Mitnehmer verstellbarer Zapfen vorgesehen, der wahlweise in die erste Führungsbahn oder in die zweite Führungsbahn eingreift. Je nach Position des Zapfens ist der Mitnehmer entlang der ersten oder zweiten Führungsbahn verfahrbar. Die Herstellung des Mitnehmers gestaltet sich dabei etwas aufwändig, weil das Stellmittel in Form des Zapfens ein inhärenter Bauteil des Mitnehmers ist. Außerdem ist der Mitnehmer aufgrund des verschiebbaren Zapfens nur einseitig (d.h. nur auf einer Seite des Gehäuses) führbar, sodass die Gefahr einer unerwünschten Verkippung des Mitnehmers besteht. Aus der US 2008/231156 A1 ist ein anderer Möbelantrieb bekannt, der den Oberbegriff des Anspruchs 1 offenbart.

Aufgabe der vorliegenden Erfindung ist es, einen Möbelantrieb der eingangs erwähnten Gattung unter Vermeidung der obigen Nachteile anzugeben. Dies wird erfindungsgemäß durch die Merkmale des Patentanspruchs 1 gelöst. Weitere vorteilhafte Ausgestaltungen sind in den abhängigen Unteransprüchen angegeben.

Gemäß der Erfindung ist also vorgesehen, dass die Führungsbahn zumindest eine zweite Abbiegung zur lösbaren Verriegelung des Mitnehmers aufweist, wobei zumindest ein bewegbar gelagertes Schaltelement mit einer ersten und mit einer zweiten Schaltstellung vorgesehen ist, wobei das Schaltelement in der ersten Schaltstellung die erste Abbiegung versperrt, sodass der Mitnehmer in die zweite Abbiegung einfahrbar ist und wobei das Schaltelement in der zweiten Schaltstellung die erste Abbiegung freigibt, sodass der Mitnehmer in die erste Abbiegung einfahrbar ist.

Mit anderen Worten weist die Führungsbahn zumindest zwei in Längsrichtung des Gehäuses voneinander beabstandete Abbiegungen zur lösbaren Verriegelung des Mitnehmers auf, wobei das Einfahren des Mitnehmers in diese Abbiegungen beim Öffnen des bewegbaren Möbelteiles durch ein vom Mitnehmer gesondertes, beweglich gelagertes Schaltelement wahlweise steuerbar ist. In einer ersten Stellung des Schaltelementes wird die erste Abbiegung versperrt, sodass der Mitnehmer in die zweite Abbiegung einfahrbar ist. In einer zweiten Stellung des Schaltelementes wird hingegen die erste Abbiegung freigegeben, sodass der Mitnehmer in diese erste Abbiegung einfährt.

Durch die zumindest zwei Abbiegungen ist der Mitnehmer wahlweise an zumindest zwei voneinander abweichenden Positionen relativ zum Gehäuse lösbar verriegelbar, wobei durch die zwei verschiedenen Verriegelungsstellungen des Mitnehmers auch zwei verschieden lange Einzugswege des Mitnehmers bzw. zwei unterschiedliche Federkräfte zum Einziehen des bewegbaren Möbelteiles zur Verfügung stehen.

Auf diese Weise kann der Einzugsweg des Mitnehmers bzw. die auf das bewegbare Möbelteil ausgeübte Kraft der Federvorrichtung variabel angepasst werden. So ist beispielsweise bei einer kleinen Schublade ein relativ kurzer Einzugsweg ausreichend. Bei einer großen und schwer beladenen Schublade kann es hingegen vorkommen, dass die Schublade aufgrund ihres Gewichtes und der auftretenden Reibung bereits vor Erreichen der geschlossenen Endstellung in einer Offenstellung stehen bleibt. Durch eine Verlängerung des Einzugsweges (d.h. durch eine Vergrößerung des relativen Abstandes zwischen den beiden Endpositionen des Mitnehmers) kann die Schublade über einen größeren Einzugsweg mit höherer Federkraft eingezogen werden.

Es ist dabei nicht zwingend erforderlich, dass das Schaltelement in der ersten Schaltstellung die erste Abbiegung vollständig versperrt, vielmehr ist es ausreichend, wenn das Schaltelement in der ersten Schaltstellung so positioniert ist, dass eine Einfahrt des Mitnehmers in die erste Abbiegung verhindert ist.

Gemäß einer Ausführungsform kann vorgesehen sein, dass das Schaltelement in der ersten Schaltstellung die erste Abbiegung durch Blockieren versperrt, sodass eine Einfahrt des Mitnehmers in die erste Abbiegung verhindert ist. Das Schaltelement ist also in der ersten Schaltstellung derart positioniert, dass die erste Abbiegung beim Ausziehen des Mitnehmers durch das Schaltelement zumindest teilweise blockiert bzw. versperrt ist und damit eine Einfahrt des Mitnehmers in diese erste Abbiegung verhindert ist.

Gemäß einer alternativen Ausführungsform kann hingegen vorgesehen sein, dass das Schaltelement seitlich neben der Führungsbahn angeordnet ist und in der ersten Schaltstellung den Mitnehmer derart ablenkt, dass eine Einfahrt des Mitnehmers in erste Abbiegung verhindert ist. Das Schaltelement befindet sich also bei dieser Ausführungsform seitlich neben bzw. außerhalb der Führungsbahn und verhindert in der ersten Schaltstellung durch Ablenkung bzw. Umlenkung des sich in Ausziehrichtung bewegenden Mitnehmers eine Einfahrt in die erste Abbiegung.

Unter "Abbiegungen" sind im Rahmen der vorliegenden Erfindung nicht nur rund ausgebildete Bögen, sondern auch winkelige Abkantungen der Führungsbahn zu verstehen.

Ein weiterer Vorteil der Erfindung liegt darin, wenn ein solcher Möbelantrieb mit einer zusätzlichen Ausstoßvorrichtung zum Ausstoßen des bewegbaren Möbelteiles aus der Schließstellung in eine Offenstellung ausgerüstet wird. Eine solche Ausstoßvorrichtung weist häufig zumindest einen, vorzugsweise verriegelbaren, Kraftspeicher auf, der durch einen Touch-Latch-Mechanismus auslösbar ist. Diese Touch-Latch-Systeme werden insbesondere dann eingesetzt, wenn die bewegbaren Möbelteile (beispielsweise aus ästhetischen Gründen) keinen Handgriff aufweisen. Die Ausstoßvorrichtung ist dabei durch manuelle Druck- oder Zugausübung auf das geschlossene Möbelteil entriegelbar, woraufhin das bewegbar gelagerte Möbelteil durch die Kraft des Kraftspeichers (vorzugsweise eine Ausstoßfeder) in eine Offenstellung ausgestoßen wird. Ein Benutzer kann im Anschluss daran das geringfügig geöffnete Möbelteil durch Hintergreifen (auch ohne Vorhandensein eines Handgriffs) weiter in Ausziehrichtung bewegen.

Wenn nun ein Möbelantrieb mit einer Einzugsfunktionalität und eine Ausstoßvorrichtung miteinander kombiniert werden, so tritt häufig das Problem auf, dass die Wirkkraft der Einzugsfeder und die Wirkkraft der Ausstoßfeder in entgegengesetzten Richtungen verlaufen und sich dadurch gegenseitig behindern. Durch eine Verstellung des Schaltelementes ist es nunmehr möglich, den Einzugsweg des Mitnehmers bei gleichzeitiger Verwendung einer Ausstoßvorrichtung zu verkürzen, sodass der Kraftspeicher der Ausstoßvorrichtung einen entsprechend kürzeren Einzugsweg des Mitnehmers und somit auch eine geringere Kraft der Federvorrichtung des ersten Möbelantriebes überwinden muss.

Bei Verwendung einer zusätzlichen Ausstoßvorrichtung ist aber auch deren Kraftspeicher (also die Ausstoßfeder) aufzuladen, was häufig bei der Einzugsbewegung des bewegbaren Möbelteiles erfolgt. Die Kraft zum Aufladen der Ausstoßfeder wirkt allerdings der Kraft der Einzugsbewegung des bewegbaren Möbelteiles entgegen, sodass ein zu langer Einzugsweg des Möbelantriebes dazu führen könnte, dass das bewegbare Möbelteil nicht in vollständige Schließstellung einziehbar ist. Durch das Umstellen des Schaltelementes in die zweite Schaltstellung kann diese Problematik behoben werden, weil hierbei ein verkürzter Einzugsweg des Möbelantriebes zur Verfügung gestellt wird. Durch diesen verkürzten Einzugsweg kann sowohl der Kraftspeicher der Ausstoßvorrichtung vollständig aufgeladen als auch das bewegbare Möbelteil durch die Schließkraft des Möbelantriebes sicher in die vollständige Schließstellung eingezogen werden.

Das Schaltelement ist beispielsweise durch eine manuelle Betätigung oder durch Betätigung eines Werkzeuges zwischen der ersten und der zweiten Schaltstellung umschaltbar. Gemäß einem Ausführungsbeispiel ist es alternativ auch möglich, dass das Schaltelement durch die Montage einer - nachträglich mit dem Gehäuse des Möbelantriebes zu verbindenden - Ausstoßvorrichtung zum Ausstoßen des bewegbaren Möbelteiles zwischen der ersten und der zweiten Schaltstellung umschaltbar ist. Das Schaltelement kann alternativ auch einen elektromechanischen Schalter oder einen elektronischen Schalter (beispielsweise einen Transistor) umfassen.

Weitere Einzelheiten und Vorteile der vorliegenden Erfindung werden anhand der nachfolgenden Figurenbeschreibung erläutert. Dabei zeigt bzw. zeigen:
- Fig. 1: ein Möbel mit einem Möbelkorpus und relativ dazu verfahrbaren Schubladen in einer perspektivischen Ansicht,

- Fig. 2a, 2b: eine Schubladenausziehführung in einer perspektivischen Ansicht sowie eine vergrößerte Detaildarstellung hierzu,
- Fig. 3a-3c: eine perspektivische Ansicht der Schubladenausziehführung mit einem Möbelantrieb zum Einziehen des bewegbaren Möbelteiles in die Schließstellung sowie mit einer daran zu montierenden Ausstoßvorrichtung, sowie zwei vergrößerte Detaildarstellungen dieser Montage,
- Fig. 4a-4c: eine Seitenansicht des Möbelantriebes mit dem Mitnehmer in der Schließstellung, eine vergrößerte Detaildarstellung hierzu sowie eine Ansicht mit teilweise ausgeblendeten Bauteilen,
- Fig. 5a-5d: den Ausziehvorgang des Mitnehmers in zeitlicher Abfolge, wobei sich das Schaltelement in der ersten Schaltstellung befindet und dabei die erste Abbiegung der Führungsbahn versperrt,
- Fig. 6a-6d: den Ausziehvorgang des Mitnehmers in zeitlicher Abfolge, wobei sich das Schaltelement in der zweiten Schaltstellung befindet und dabei die erste Abbiegung der Führungsbahn für eine Einfahrt des Mitnehmers freigibt,
- Fig. 7: der Möbelantrieb in einer Explosionsdarstellung,
- Fig. 8: die Führungsbahn für den Mitnehmer und die Steuerkurve für den Kippteil der Kraftabsenkmechanik in schematischer Ansicht,
- Fig. 9a, 9b: einen Möbelantrieb in einer geringfügig modifizierten Ausführungsform, wobei das Schaltelement in der ersten Schaltstellung den Mitnehmer derart ablenkt, dass eine Einfahrt des Mitnehmers in erste Abbiegung verhindert ist.
- Fig. 10a-10c: Teilbereiche des Möbelantriebes gemäß Fig. 9a, 9b mit verschiedenen Stellungen des Mitnehmers in Ausziehrichtung, wobei sich das Schaltelement in der ersten Schaltstellung befindet,
- Fig. 11a, 11b: Teilbereiche des Möbelantriebes gemäß Fig. 9a, 9b mit zwei verschiedenen Stellungen des Mitnehmers, wobei sich das Schaltelement in der zweiten Schaltstellung befindet,
- Fig. 12a-12c: die Montage einer Ausstoßvorrichtung am Möbelantrieb, wodurch das Schaltelement ausgehend von der ersten Schaltstellung in die zweite Schaltstellung umschaltbar ist.

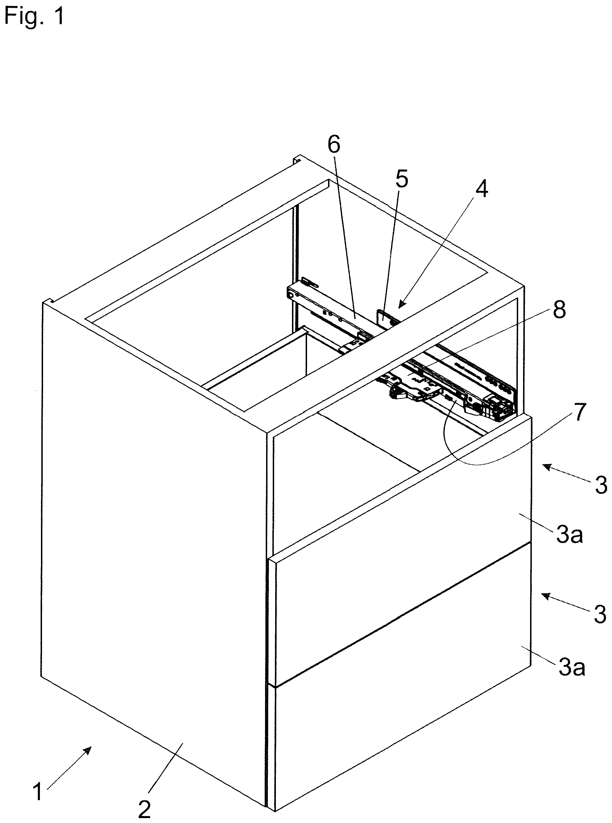

Fig. 1 zeigt eine perspektivische Ansicht eines Möbels 1 mit einem Möbelkorpus 2, wobei bewegbare Möbelteile 3 in Form von Schubladen 3a über Schubladenausziehführungen 4 relativ zum Möbelkorpus 2 verfahrbar gelagert sind. Die Schubladenausziehführung 4 weist eine am Möbelkorpus 2 zu befestigende Korpusschiene 5 und zumindest eine relativ zur Korpusschiene 5 verfahrbar gelagerte Ausziehschiene 6 auf. Durch einen Möbelantrieb 7 ist das bewegbare Möbelteil 3 in eine Schließstellung relativ zum Möbelkorpus 2 einziehbar. Überdies ist eine Ausstoßvorrichtung 8 vorgesehen, durch die das bewegbare Möbelteil 3 ausgehend von der Schließstellung in eine Offenstellung ausstoßbar ist.

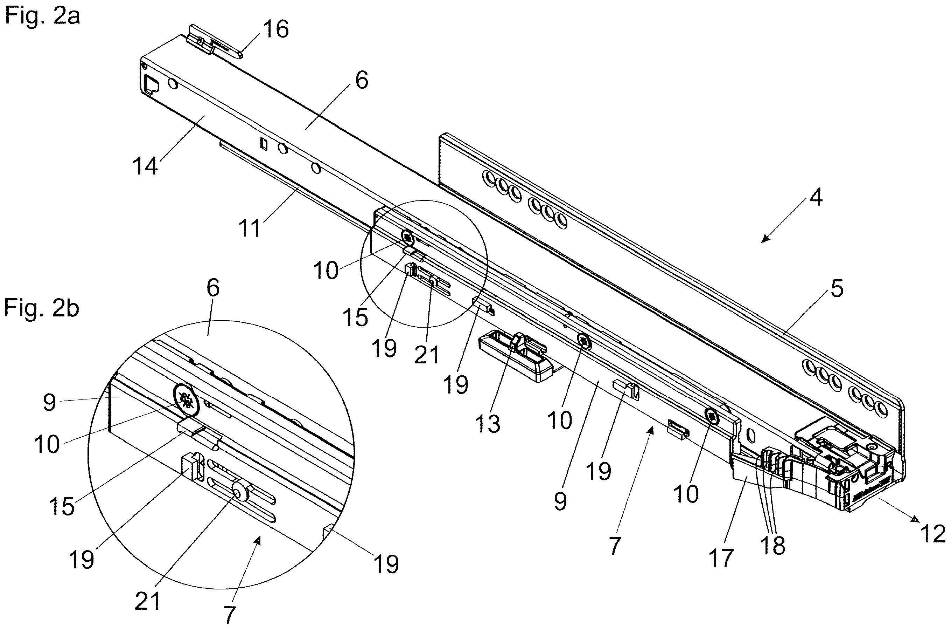

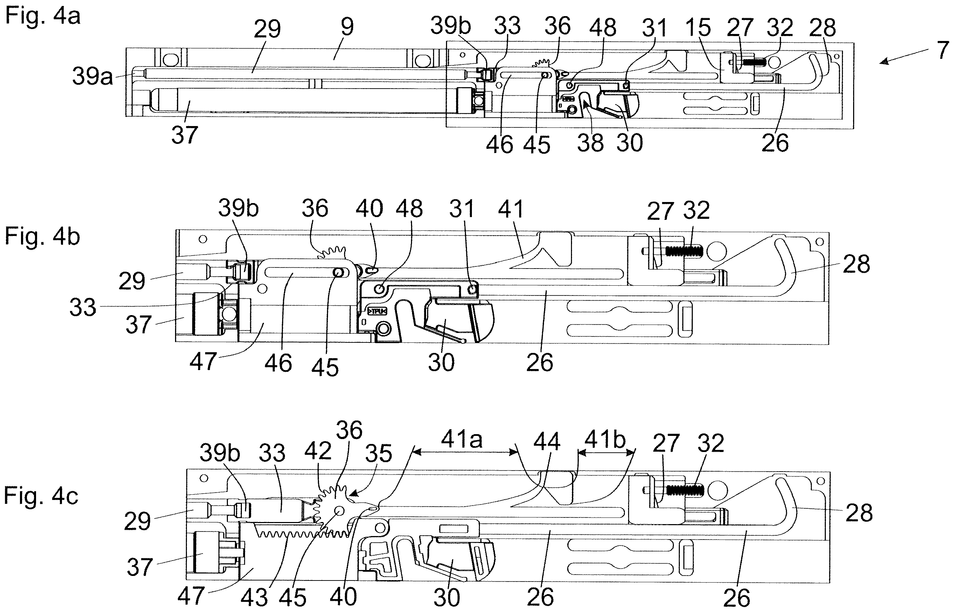

Fig. 2a zeigt eine perspektivische Ansicht der Schubladenausziehführung 4 mit der Korpusschiene 5 und der Ausziehschiene 6, zwischen denen eine auszugsverlängernde Mittelschiene 11 verfahrbar gelagert ist. Die Schubladenausziehführung 4 befindet sich in der gezeigten Figur in der Schließstellung, sodass die Ausziehschiene 6 in Öffnungsrichtung 12 ausziehbar ist. Die Ausziehschiene 6 weist im Querschnitt ein U-Profil auf, wobei ein Gehäuse 9 des Möbelantriebes 7 an einem seitlichen Schenkel 14 der Ausziehschiene 6 über Befestigungsmittel 10, vorzugsweise in Form von Schrauben, montiert ist. Durch den Möbelantrieb 7 ist die Ausziehschiene 6 gegen Ende der Schließbewegung in die geschlossene Endlage einziehbar. Der Möbelantrieb 7 weist ein relativ zum Gehäuse 9 bewegbar gelagertes Schaltelement 15 auf, das zwischen zumindest zwei Schaltstellungen umschaltbar (vorzugsweise verschiebbar oder verdrehbar) ist. Durch eine Umschaltung des Schaltelementes 15 ist ein Mitnehmer 30 (Fig. 4a) des Möbelantriebes 7 über zumindest zwei verschieden lange Strecken bis hin zur geschlossenen Endlage des Mitnehmers 30 einziehbar. In der gezeigten Figur befindet sich das Schaltelement 15 in der ersten Stellung, in der ein langer Einzugsweg für den Mitnehmer 30 (und damit für die Ausziehschiene 6) bereitgestellt ist. Fig. 2b zeigt den in Fig. 2a eingekreisten Bereich in einer vergrößerten Ansicht.

Zur Befestigung des rückseitigen Endes der Schublade 3a ist an der Ausziehschiene 6 ein Haken 16 vorgesehen, der in Montagelage in eine an der Rückseite der Schubladenrückwand angeordnete Bohrung hineinragt. Zur Befestigung des frontseitigen Endes der Schublade 3a ist am frontseitigen Ende der Ausziehschiene 6 ein manuell zu betätigender Kupplungshebel 17 vorgesehen, dessen Rastkanten 18 durch die federnde Ausbildung des Kupplungshebels 17 selbsttätig mit einer an der Schublade 3a befestigten Trägerschiene lösbar verrastbar sind. Das Gehäuse 9 des Möbelantriebes 7 ist zudem mit mehreren Haken 19 versehen, die in korrespondierenden Ausnehmungen der Ausstoßvorrichtung 8 eingreifen können. Zur spielfreien Festlegung ist am Gehäuse 9 des Möbelantriebes 7 wenigstens ein Vorsprung 21 ausgebildet, der in Montagelage am Gehäuse 22 der Ausstoßvorrichtung 8 anliegt. An der feststehenden Korpusschiene 5 ist ein Ausstoßmitnehmer 13 befestigt, der mit der Ausstoßvorrichtung 8 koppelbar ist.

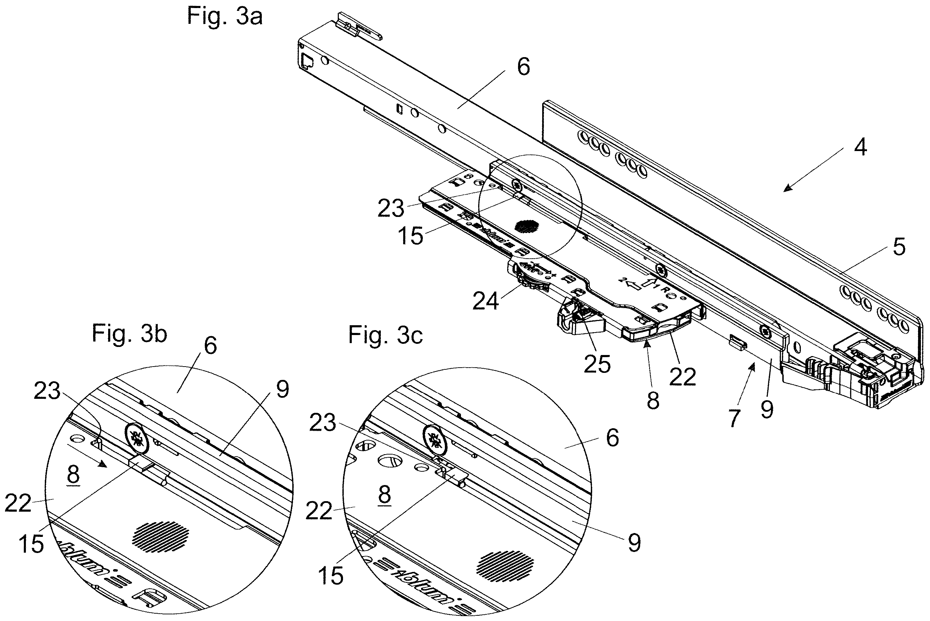

Fig. 3a zeigt die Schubladenausziehführung 4 mit dem an der Ausziehschiene 6 befestigten Möbelantrieb 7. Am Gehäuse 9 des Möbelantriebes 7 ist ein Gehäuse 22 der Ausstoßvorrichtung 8 lösbar zu befestigen. Die Ausstoßvorrichtung 8 weist ein Verstellrad 24 auf, durch welches die Lage der Schublade 3a in der Schließstellung variabel einstellbar ist. Überdies weist die Ausstoßvorrichtung 8 einen drehbaren Teil 25 auf, durch den eine Bewegung der Ausstoßvorrichtung 8 über eine (nicht gezeigte) Synchronisationsstange mit einer Bewegung einer am Möbelkorpus 2 gegenüberliegenden zweiten Ausstoßvorrichtung 8 synchronisierbar ist.

In Fig. 3a und in der vergrößerten Detailansicht gemäß Fig. 3b ist das Gehäuse 22 der Ausstoßvorrichtung 8 relativ zum Gehäuse 9 des Möbelantriebes 7 über die in Fig. 2a gezeigten Haken 19 vorpositioniert, wobei das Gehäuse 22 der Ausstoßvorrichtung 8 einen Anschlag 23 zur Betätigung des Schaltelementes 15 aufweist. Ausgehend von der Vorposition gemäß Fig. 3a und Fig. 3b kann das Gehäuse 22 der Ausstoßvorrichtung 8 durch manuelle Druckausübung in Richtung des eingezeichneten Pfeils relativ zum Gehäuse 9 des Möbelantriebes 7 verschoben werden, sodass der Anschlag 23 das Schaltelement 15 ausgehend von der ersten Schaltstellung nach rechts in die zweite Schaltstellung gemäß Fig. 3c verschiebt. In der in Fig. 3c gezeigten zweiten Schaltstellung ist ein im Vergleich zur ersten Schaltstellung reduzierter Einzugsweg des Mitnehmers 30 (Fig. 4a) des Möbelantriebes 7 bereitgestellt, damit der Kraftspeicher der Ausstoßvorrichtung 8 beim Ausstoßen der Schublade 3a aus der Schließstellung nur einen verkürzten Einzugsweg des Mitnehmers 30 bzw. eine geringere Kraft der Federvorrichtung 29 überwinden muss.

Fig. 4a zeigt eine Seitenansicht des Möbelantriebes 7, wobei am Gehäuse 9 eine Führungsbahn 26 mit zumindest zwei voneinander in Längsrichtung des Gehäuses 9 beabstandeten Abbiegungen 27, 28 angeordnet oder ausgebildet ist. Das am Gehäuse 9 beweglich gelagerte Schaltelement 15 befindet sich dabei in der ersten Schaltstellung, sodass die erste Abbiegung 27 versperrt ist. Ein durch eine Federvorrichtung 29 beaufschlagter Mitnehmer 30, der mit dem bewegbaren Möbelteil 3 lösbar koppelbar ist, ist über zumindest ein Führungselement 31 entlang der Führungsbahn 26 verschiebbar geführt. Die Federvorrichtung 29, die vorzugsweise zumindest eine Zugfeder umfasst, ist über eine erste Befestigungsstelle 39a am Gehäuse 9 und über eine zweite Befestigungsstelle 39b an einem vom Mitnehmer 30 gesonderten Federhalter 33 befestigt, wobei der Federhalter 33 mit dem Mitnehmer 30 über eine Koppelvorrichtung 35 (Fig. 4c) bewegungsgekoppelt in Verbindung steht. Der Mitnehmer 30 weist eine Kerbe 38 zur lösbaren Kopplung mit einem an der Ausziehschiene 6 oder am bewegbaren Möbelteil 3 befestigten Koppelelement (vorzugsweise einem Mitnehmerzapfen) auf. Durch die zwei Abbiegungen 27, 28 ist der Mitnehmer 30 wahlweise an zwei verschiedenen Positionen relativ zum Gehäuse 9 lösbar verriegelbar, wobei die Federvorrichtung 29 in der Stellung, in welcher der Mitnehmer 30 mit der ersten Abbiegung 27 lösbar verriegelt ist, weniger gespannt ist als in jener Stellung, in welcher der Mitnehmer 30 mit der zweiten Abbiegung 28 lösbar verriegelt ist. Die erste Abbiegung 27 und die zweite Abbiegung 28 verlaufen zumindest abschnittsweise parallel zueinander. Das Schaltelement 15 ist durch ein von der Federvorrichtung 29 gesondertes Federelement 32 in die erste, die Abbiegung 27 versperrende Schaltstellung drückbar, sodass für den Möbelantrieb 7 standardmäßig ein langer Einzugsweg für den Mitnehmer 30 zur Verfügung steht. Die federunterstützte Einzugsbewegung des Mitnehmers 30 (und damit jene des bewegbaren Möbelteiles 3) ist durch eine Dämpfvorrichtung 37, vorzugsweise eine hydraulische Kolben-Zylinder-Einheit, dämpfbar.

Fig. 4b zeigt den in Fig. 4a eingerahmten Bereich in einer vergrößerten Ansicht. Im gezeigten Ausführungsbeispiel ist der Mitnehmer 30, vorzugsweise über eine Schwenkachse 48, mit einem verfahrbaren Schieber 47 verbunden, wobei die Koppelvorrichtung 35 einen um einen Bolzen 45 drehbar gelagerten Kippteil 36 aufweist. Der Bolzen 45 ist am Federhalter 33 angeordnet und ist entlang eines Langlochs 46 des Schiebers 47 gleitend geführt. Der Kippteil 36 weist wenigstens ein Führungsteil 40 auf, welches entlang einer Steuerkurve 41 verschiebbar gelagert ist.

Fig. 4c zeigt die Detailansicht gemäß Fig. 4b, wobei das Langloch 46 des Schiebers 47 ausgeblendet ist. Die Koppelvorrichtung 35 umfasst den schwenkbaren Kippteil 36, wobei eine erste Verzahnung 42 des Kippteiles 36 mit einer zweiten Verzahnung 43 des Schiebers 47 zusammenwirkt. Durch die Koppelvorrichtung 35 fällt die Befestigungsstelle 39b der Federvorrichtung 29 am Federhalter 33 gegenüber der Position des sich in Öffnungsrichtung verfahrenden Mitnehmers 30 zurück, sodass gegen Ende des Spannweges die Bewegung der Befestigungsstelle 39b der Federvorrichtung 29 langsamer als die Bewegung des Mitnehmers 30 ist. Das Aufladen der Federvorrichtung 29 erfolgt dadurch mit einem reduzierten Kraftaufwand, der unerwünschte Federabriss und eine damit verbundene, übermäßige Beschleunigung des bewegbaren Möbelteiles 3 beim Entkuppeln des Mitnehmers 30 vom bewegbaren Möbelteil 3 kann damit verhindert werden. Die zum Führen des Kippteiles 36 vorgesehene Steuerkurve 41 weist einen ersten Abschnitt 41a und einen zweiten Abschnitt 41b auf, die über einen Scheitelpunkt 44 miteinander verbunden sind.

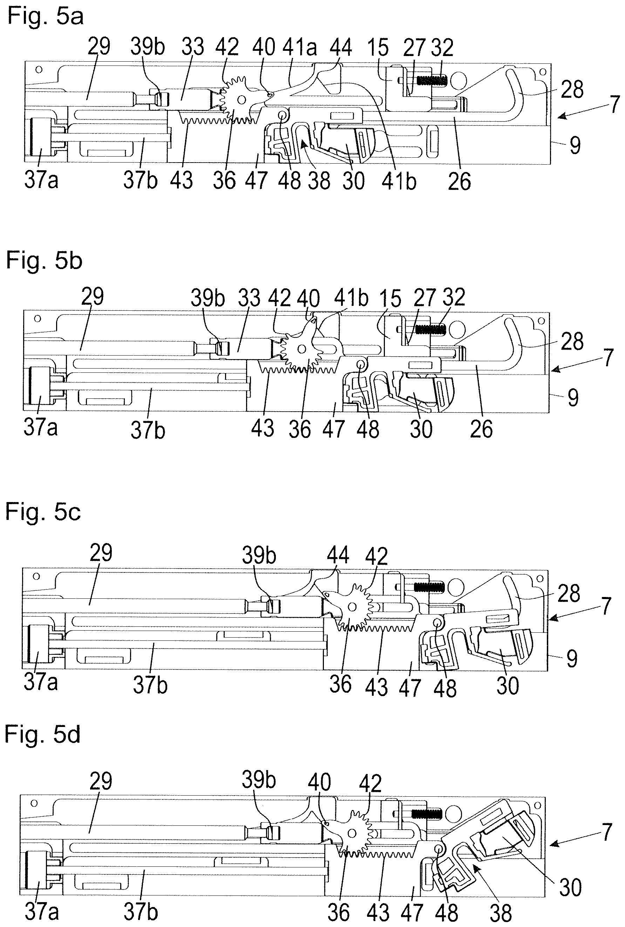

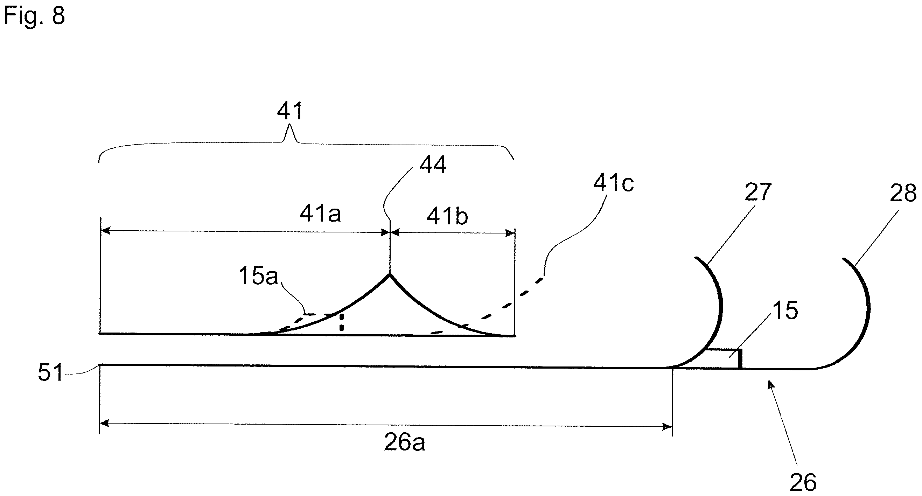

Fig. 5a-5d zeigen den Ausziehvorgang des Mitnehmers 30 in zeitlicher Abfolge. Ausgehend von der Schließstellung gemäß Fig. 4a-4c ist der Mitnehmer 30 durch manuelle Zugbewegung auf das bewegbare Möbelteil 3 zunächst entlang einem linear verlaufenden Abschnitt 26a (Fig. 8) der Führungsbahn 26 verfahrbar gelagert. Der Mitnehmer 30 ist mit dem verfahrbaren Schieber 47 über eine Schwenkachse 48 verbunden, wobei die Verzahnung 43 des Schiebers 47 mit der Verzahnung 42 des Kippteiles 36 kämmt. Der Kippteil 36 ist mit dem Federhalter 33 gelenkig verbunden, der über die Befestigungsstelle 39b mit der Federvorrichtung 29 in Verbindung steht. Der Kippteil 36 weist einen Führungsteil 40 auf, der entlang der Steuerkurve 41 führbar ist. In den Fig. 5a-5d befindet sich das Schaltelement 15 in der ersten Schaltstellung, wobei also die erste Abbiegung 27 für eine Einfahrt des Mitnehmers 30 versperrt ist, sodass also der Mitnehmer 30 entlang der längeren Führungsbahn 26 geführt und anschließend mit der zweiten Abbiegung 28 lösbar verriegelbar ist.

In Fig. 5b befindet sich der Mitnehmer 30 in einer geringfügig ausgezogenen Position, wobei sich das Führungsteil 40 des Kippteiles 36 am Scheitelpunkt 44 der Steuerkurve 41 befindet. Die Befestigungsstelle 39b der Federvorrichtung 29 am Federhalter 33 bewegt sich zunächst mit der gleichen Geschwindigkeit wie der in Ausziehrichtung verfahrende Mitnehmer 30.

In Fig. 5c ist der Mitnehmer 30 noch weiter ausgezogen, wobei das Führungsteil 40 des Kippteiles 36 in der ersten Schaltstellung des Schaltelementes 15 entlang der Abschnitte 41a und 41b der Steuerkurve 41 führbar ist. Die Befestigungsstelle 39b beginnt sich durch das Zusammenwirken der Verzahnungen 42, 43 und durch eine Schwenkbewegung des Kippteiles 36 kontinuierlich zu verlangsamen, sodass die Federvorrichtung 29 nicht bis zur maximalen Federauslenkung gespannt wird.

In Fig. 5d wurde der Mitnehmer 30 durch das Zusammenwirken mit der zweiten Abbiegung 28 um die Schwenkachse 48 verschwenkt, sodass der Mitnehmer 30 mit der zweiten Abbiegung 28 lösbar verriegelt ist und sich damit in einer selbsthemmend arretierten Bereitschaftsposition befindet. Durch das Verschwenken des Mitnehmers 30 wird ein (nicht gezeigtes) Koppelelement der Ausziehschiene 6 freigegeben, sodass das bewegbare Möbelteil 3 ungekoppelt weiter in Richtung Offenstellung verfahrbar ist. Ausgehend von der Position gemäß Fig. 5d kann das besagte Koppelelement bei der Schließbewegung des bewegbaren Möbelteiles 3 den Mitnehmer 30 wieder aus der selbsthemmend arretierten Bereitschaftsposition herauslösen, woraufhin der Mitnehmer 30 zusammen mit dem bewegbaren Möbelteil 3 durch die Kraft der Federvorrichtung 29 in die Schließstellung einziehbar ist. Durch eine Dämpfvorrichtung 37 mit einem Zylinder 37a und einer relativ dazu verschiebbaren Kolbenstange 37b, deren freies Ende am verfahrbaren Schieber 47 lose anliegt, kann diese federunterstützte Einzugsbewegung des Mitnehmers 30 gedämpft ablaufen.

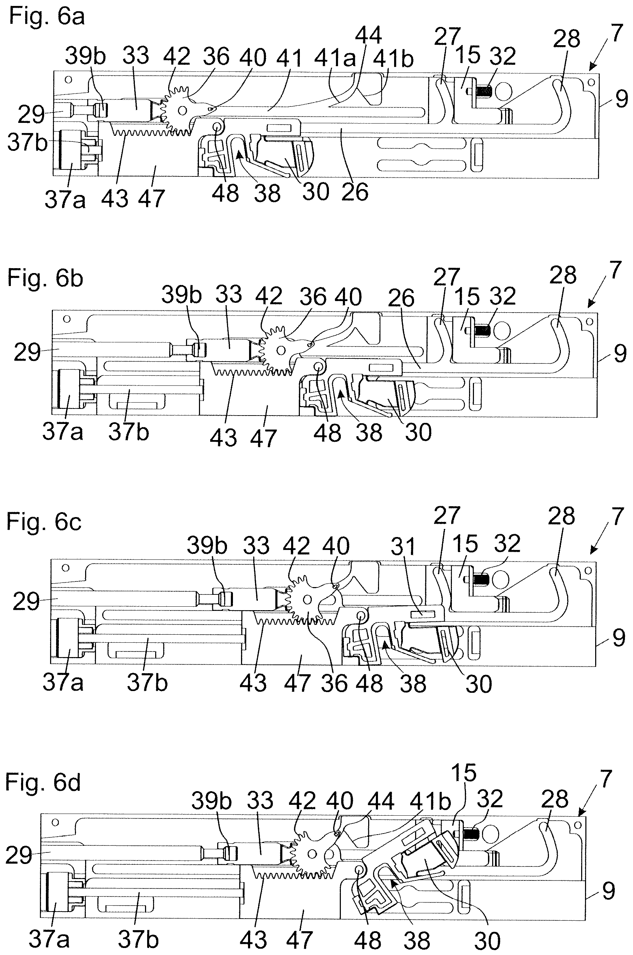

Fig. 6a zeigt den Möbelantrieb 7, wobei das relativ zum Gehäuse 9 verschiebbar gelagerte Schaltelement 15 in die zweite Schaltstellung bewegt wurde, wobei also die erste Führungsbahn 27 für eine Einfahrt des Mitnehmers 30 freigegeben ist. Die Umschaltung des Schaltelementes 15 kann rein mechanisch erfolgen, vorzugsweise durch die nachträgliche Montage der Ausstoßvorrichtung 8 (Fig. 3b, 3c) am Gehäuse 9 des Möbelantriebes 7. Zu erkennen ist, dass sich das Federelement 32 in einem komprimierten Zustand befindet, sodass bei einer Demontage der Ausstoßvorrichtung 8 das Schaltelement 15 durch die Kraft des sich entspannenden Federelementes 32 selbsttätig in die erste Schaltstellung zurückbewegt wird. In Fig. 6a befindet sich der Mitnehmer 30 in der eingezogenen Endstellung, wobei die Federvorrichtung 29 entspannt ist.

Fig. 6b zeigt, dass der Mitnehmer 30 durch manuelle Zugausübung auf das bewegbare Möbelteil 3 zunächst entlang einem linear verlaufenden Abschnitt 26a (Fig. 8) der Führungsbahn 26 bewegbar ist. Durch die Koppelvorrichtung 35 mit dem Kippteil 36, dessen Verzahnung 42 mit der Verzahnung 43 des verfahrbaren Schiebers 47 zusammenwirkt, ist eine Kraftabsenkmechanik realisiert, wobei die Befestigungsstelle 39b der Federvorrichtung 29 am Federhalter 33 beim Ausziehen des Mitnehmers 30 gegenüber der Position des sich in Öffnungsrichtung verfahrenden Mitnehmers 30 zurückfällt. Der Kippteil 36 weist ein Führungsteil 40 auf, welches entlang der Steuerkurve 41 (Fig. 6a) verschiebbar geführt ist.

Fig. 6c zeigt eine im Vergleich zu Fig. 6b weitere ausgezogene Spannstellung des Mitnehmers 30. Durch eine asymmetrische Anlenkung der Federvorrichtung 29 an der Befestigungsstelle 39b hat das Führungselement 30 des Mitnehmers 30 die Tendenz, seitlich in Richtung der ersten Abbiegung 28 auszuweichen, sodass der Mitnehmer 30 nicht weiter in Richtung der zweiten Abbiegung 28 bewegt wird. Die erste Abbiegung 27 und die zweite Abbiegung 28 können zumindest abschnittsweise parallel zueinander verlaufen.

In Fig. 6d ist der Mitnehmer 30 mit der ersten Abbiegung 27 lösbar verriegelt, wobei ein mit der Ausziehschiene 6 verbundenes Koppelelement durch das Verschwenken des Mitnehmers 30 um die Schwenkachse 48 freigegeben wird. Die Federvorrichtung 29 ist in der gezeigten Stellung, in welcher der Mitnehmer 39 mit der ersten Abbiegung 27 lösbar verriegelt ist, weniger gespannt ist als in jener Stellung, in welcher der Mitnehmer 30 mit der zweiten Abbiegung 28 lösbar verriegelt ist. Durch die zumindest zwei Stellungen des Schaltelementes 15 stehen zumindest zwei verschieden lange Einzugswege des Mitnehmers 30 und zumindest zwei verschiedene Einzugskräfte der Federvorrichtung 29 zur Verfügung.

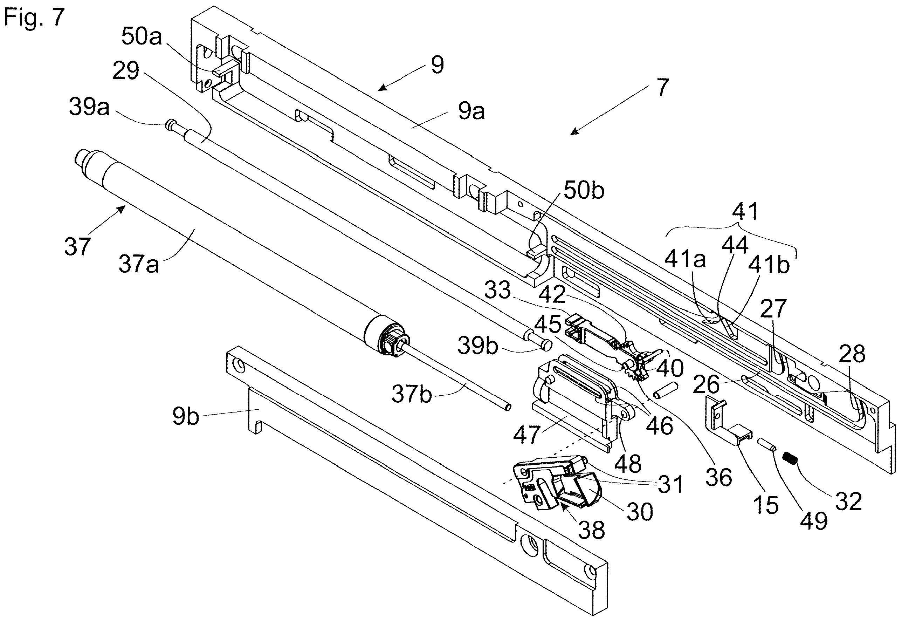

Fig. 7 zeigt den Möbelantrieb 7 in einer Explosionsdarstellung. Das Gehäuse 9 umfasst zwei miteinander zu verbindende Gehäuseteile 9a und 9b, an denen die Führungsbahn 26 für den Mitnehmer 30 mit den zwei Abbiegungen 27 und 28, die in Längsrichtung des Gehäuses 9 voneinander beabstandet sind, ausgebildet sind. Überdies ist am Gehäuse 9 eine Steuerkurve 41 für den Kippteil 36 ausgebildet, die einen ersten Abschnitt 41a und einen zweiten Abschnitt 41b aufweist, die über den Scheitelpunkt 44 miteinander verbunden sind. Zur lösbaren Befestigung der Dämpfvorrichtung 37 sind am Gehäuse 9 federnde Halterungen 50a und 50b vorgesehen, an denen der Zylinder 37a aufschnappbar ist. Die Federvorrichtung 29 ist über eine erste Befestigungsstelle 39a am Gehäuse 9 und über eine zweite Befestigungsstelle 39b am Federhalter 33 befestigt, der über einen Bolzen 45 entlang eines Langlochs 46 des Schiebers 47 verschiebbar geführt ist. Mit dem Federhalter 33 ist ein Kippteil 36 mit einer Verzahnung 42 verbunden, die mit einer hier nicht ersichtlichen Verzahnung 43 des Schiebers 47 zusammenwirkt. Der Mitnehmer 30 steht mit dem Schieber 47 über eine Schwenkachse 48 gelenkig in Verbindung. Der Mitnehmer 30 weist Führungselemente 31 auf, durch die der Mitnehmer 30 entlang der Führungsbahn 26 des Gehäuses 9 verschiebbar geführt und über die der Mitnehmer 30 mit den beiden Abbiegungen 27 und 28 lösbar verriegelbar ist. Der Mitnehmer 30 weist eine Kerbe 38 zu lösbaren Kopplung mit dem bewegbaren Möbelteil 3 auf. Das zwischen zwei Schaltstellungen bewegbare Schaltelement 15 ist an einem Lagerelement 49 angeordnet und wird durch das Federelement 32 in die erste Schaltstellung gedrückt, in der die erste Abbiegung 27 versperrt ist. Auf diese Weise steht standardmäßig (d.h. ohne die Befestigung der Ausstoßvorrichtung 8) ein längerer Einzugsweg für den Mitnehmer 30 zur Verfügung. Das vom Mitnehmer 30 gesonderte Schaltelement 30 kann auch eine Aufnahme für ein Werkzeug aufweisen, wobei durch Betätigung des Werkzeuges das Schaltelement 15 zwischen den zwei Schaltstellungen verstellbar ist. Das Schaltelement 15 kann auch zwei oder mehrteilig ausgebildet sein, wobei ein zu betätigender erster Teil mit einem die Abbiegung 27 versperrenden zweiten Teil bewegungsgekoppelt in Verbindung steht.

Fig. 8 zeigt stark schematisiert den Verlauf der Führungsbahn 26, die ausgehend von der eingezogenen Endstellung 51 des Mitnehmers 30 einen linearen Verfahrweg 26a und zumindest zwei voneinander in Längsrichtung beabstandete Abbiegungen 27 und 28 zur lösbaren Verriegelung des Mitnehmers 30 umfasst. In einer ersten Schaltstellung des Schaltelementes 15 ist die erste Abbiegung 27 versperrt, sodass der Mitnehmer 30 beim Spannen der Federvorrichtung 29 in die zweite Abbiegung 28 einfährt. Die Steuerkurve 41 zur Führung des Kippteiles 36 umfasst hingegen einen ersten Abschnitt 41a und einen zweiten Abschnitt 41b, die über den Scheitelpunkt 44 miteinander verbunden sind. Wenn nun zwei voneinander beabstandete Abbiegungen 27 und 28 vorgesehen sind, so müsste die Steuerkurve 41 theoretisch auch einen zusätzlichen dritten Abschnitt 41c umfassen, der vom ersten Abschnitt 41a in Längsrichtung beabstandet ist. Überdies wäre auch die Einfahrt des Kippteiles 36 in den ersten Abschnitt 41a oder alternativ in den dritten Abschnitt 41c durch ein zusätzliches Schaltelement 15a zu steuern. Durch den an den ersten Abschnitt 41a anschließenden zweiten Abschnitt 41b ist es aber möglich, sowohl auf den dritten Abschnitt 41c als auch auf das zusätzliche Schaltelement 15a zu verzichten, sodass also ein einziges Schaltelement 15 sowohl für die Wahl der Abbiegungen 27, 28 als auch für die dazu korrespondierende Länge der Steuerkurve 41 ausreichend ist. Die Kraftabsenkung verhält sich bei beiden Verfahrwegen des Mitnehmers 30 in die Abbiegungen 27, 28 proportional zum Weg. Der Kippteil 36 ist in der ersten Schaltstellung des Schaltelementes 15, in der die erste Abbiegung 27 versperrt ist, entlang dem ersten Abschnitt 41a und dem zweiten Abschnitt 41b führbar. Befindet sich hingegen das Schaltelement 15 in der zweiten Schaltstellung, in der die erste Abbiegung 27 freigegeben ist, so ist der Kippteil 36 ausschließlich entlang dem ersten Abschnitt 41a der Steuerkurve 41 geführt.

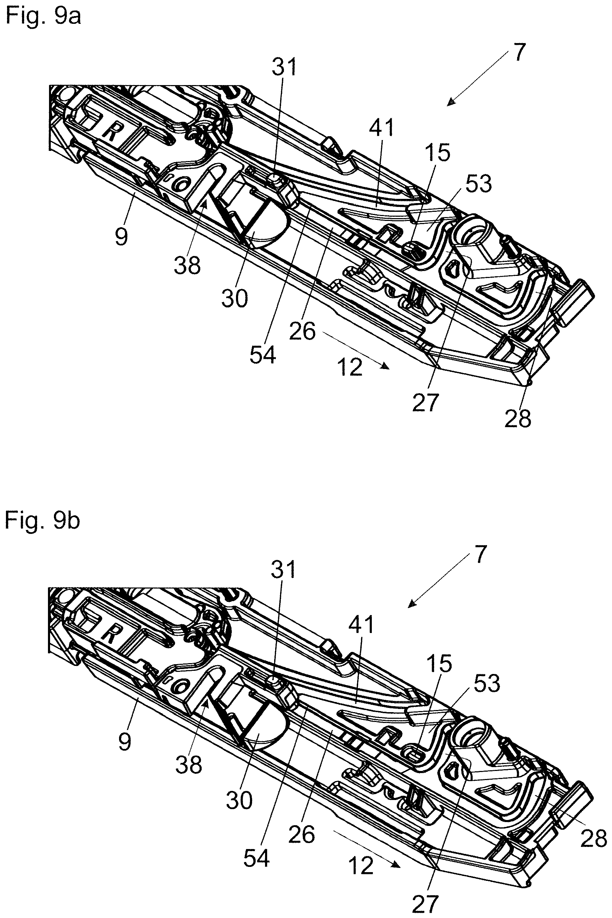

Fig. 9a zeigt einen Möbelantrieb 7 in einer geringfügig modifizierten Ausführungsform, wobei das Schaltelement 15 seitlich neben der Führungsbahn 26 angeordnet ist und in der ersten Schaltstellung den Mitnehmer 30 derart ablenkt, dass eine Einfahrt des Mitnehmers 30 in erste Abbiegung 27 verhindert ist. Anders als beim vorhergehenden Ausführungsbeispiel, in welchem das Schaltelement 15 in der ersten Schaltstellung die erste Abbiegung 27 ganz oder teilweise versperrt und so eine Einfahrt des Mitnehmers 30 in die erste Abbiegung 27 verhindert, befindet sich das bewegbare Schaltelement 15 bei dieser Ausführungsform nunmehr seitlich neben bzw. außerhalb der Führungsbahn 26. Das Schaltelement 15 weist einen bewegbaren Vorsprung auf, welcher in der ersten Schaltstellung (Fig. 9a) von einem Boden 53 des Gehäuses 9 absteht und in der zweiten Schaltstellung (Fig. 9b) im Wesentlichen bündig zum Boden 53 des Gehäuses 9 verläuft und so eine Einfahrt des Mitnehmers 30 in die erste Abbiegung 27 gestattet. Auch hier kann - wie bereits beschrieben - vorgesehen sein, dass das Schaltelement 15 durch die Montage und Demontage einer - nachträglich mit dem Gehäuse 9 des Möbelantriebes 7 zu verbindenden - Ausstoßvorrichtung 8 zwischen der ersten Schaltstellung und der zweiten Schaltstellung umschaltbar ist.

Fig. 9b zeigt den Möbelantrieb 7 mit dem Schaltelement 15 in der zweiten Schaltstellung, sodass der Mitnehmer 30 beim Ausziehen in Öffnungsrichtung in die erste Abbiegung 27 einfährt. Wie auch in den vorangegangenen Ausführungsbeispielen fährt der Mitnehmer 30 beim Ausziehen in Ausziehrichtung 12 (und wenn sich das Schaltelement 15 in der zweiten Schaltstellung befindet) in die erste Abbiegung 27 ein, weil der Mitnehmer 30 durch die Kraft der Federvorrichtung 29 mit einer Kraft quer zur Ausziehrichtung 12 gegen die Seitenwandung 54 der Führungsbahn 26 gedrückt wird.

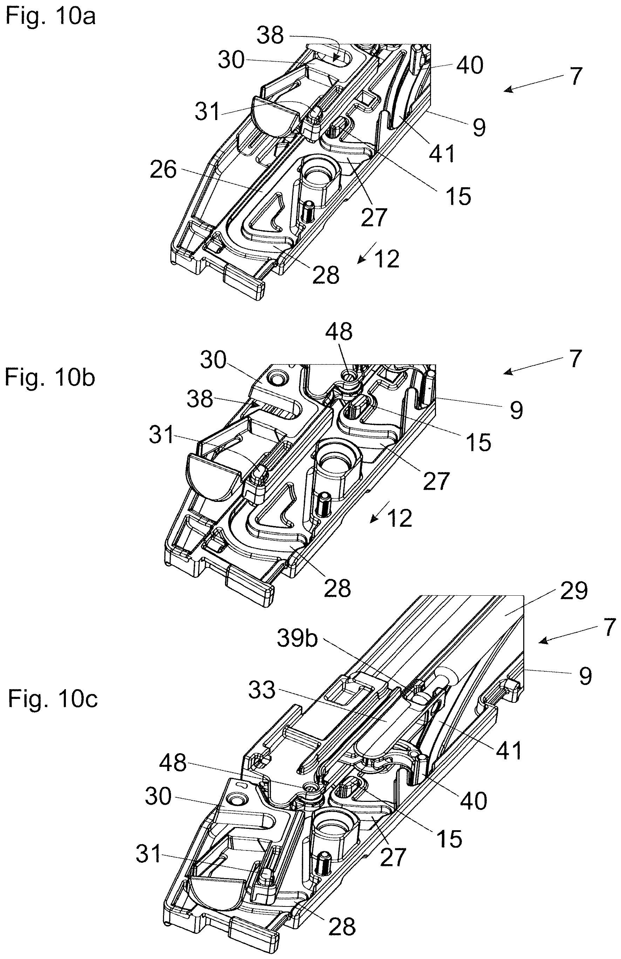

Fig. 10a-10c zeigen einen Teilbereich des Möbelantriebes 7 mit verschiedenen Stellungen des Mitnehmers 30 in Ausziehrichtung 12. Gemäß Fig. 10a befindet sich das am Gehäuse 9 bewegbar gelagerte Schaltelement 15 in der ersten Schaltstellung, in welcher eine Einfahrt des Mitnehmers 30 in die erste Abbiegung 27 verhindert ist. Das bewegbare Schaltelement 15 ist dabei seitlich neben der Führungsbahn 29 angeordnet und lenkt in der ersten Schaltstellung den Mitnehmer 30 derart ab, dass beim Ausziehen in Ausziehrichtung 12 eine Einfahrt des Mitnehmers 30 in erste Abbiegung 27 nicht möglich ist. Der Mitnehmer 30 wird also - wie in Fig. 10b ersichtlich - an der ersten Abbiegung 27 vorbeigelenkt, woraufhin das Führungselement 31 des Mitnehmers 30 in die zweite Abbiegung 28 einfährt und dadurch den Mitnehmer 30 um die Schwenkachse 48 verkippt. Durch das Verkippen des Mitnehmers 30 um die Schwenkachse 48 wird das bewegbare Möbelteil 3 vom Mitnehmer 30 entkoppelt und kann weiter in Ausziehrichtung 12 bewegt werden. Wird das bewegbare Möbelteil 3 wieder geschlossen, so wird der Mitnehmer 30 wieder aus der verriegelten Stellung mit der zweiten Abbiegung 28 gelöst und zusammen mit dem bewegbaren Möbelteil 3 durch die Kraft der Federvorrichtung 29 in die Schließstellung eingezogen.

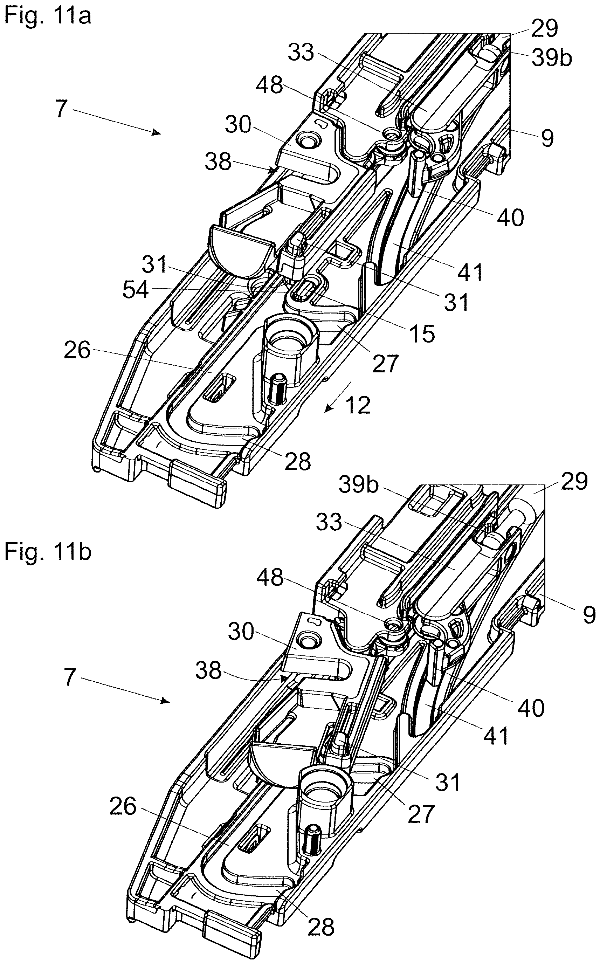

Fig.11a und Fig. 11b zeigen jeweils einen Teilbereich des Möbelantriebes 7, wobei sich das am Gehäuse 9 beweglich gelagerte Schaltelement 15 in der zweiten Schaltstellung befindet. In der zweiten Schaltstellung des Schaltelementes 15 ist dieses soweit versenkt, dass das Schaltelement 15 eine Bewegung des Mitnehmers 30 nicht behindert. Da die beiden Führungselemente 31 des Mitnehmers 30 durch die Kraft der Federvorrichtung 29 gegen die Seitenwandung 54 der Führungsbahn 26 gedrückt werden, fährt der Mitnehmer 30 bei einer Bewegung in Ausziehrichtung 12 in die erste Abbiegung 27 ein. Durch das Einfahren der Führungselemente 31 in die erste Abbiegung wird der Mitnehmer 30 um die Schwenkachse 48 verdreht und gibt das bewegbare Möbelteil 3 frei. Fig. 11b zeigt den in der ersten Abbiegung 27 lösbar verriegelten Mitnehmer 30. Durch die beiden vom Mitnehmer 30 quer abstehenden Führungselemente 31 ist der Mitnehmer 30 zwischen zwei Gehäuseteilen 9a, 9b (Fig. 7) des Gehäuses 9 beidseitig geführt, wodurch eine unerwünschte Verkippung des Mitnehmers 30 zwischen den beiden Gehäuseteilen 9a, 9b des Gehäuses 9 verhindert ist.

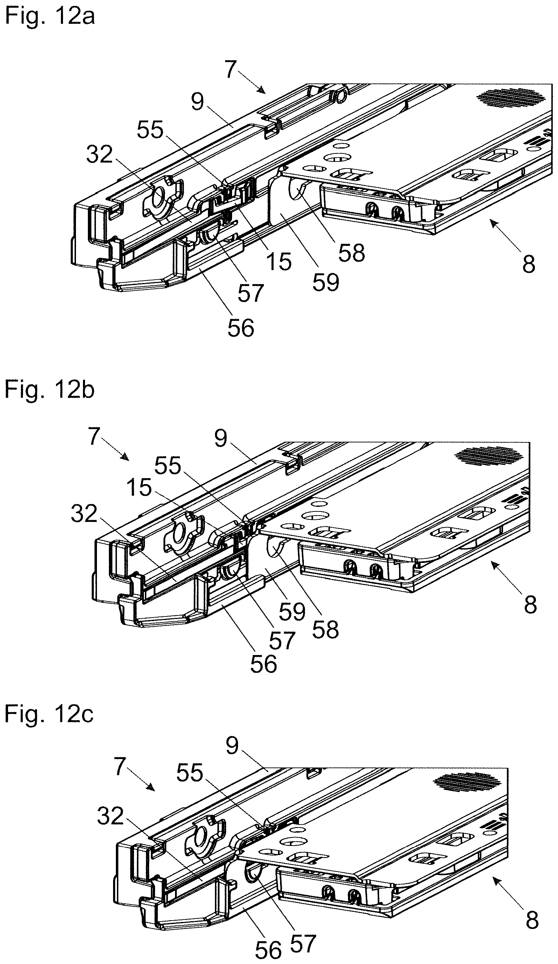

Fig. 12a-12c zeigen die Montage einer Ausstoßvorrichtung 8 am Möbelantrieb 7, wobei durch diese Montage das Schaltelement 15 ausgehend von der ersten Schaltstellung in die zweite Schaltstellung umschaltbar ist. Das Schaltelement 15 ist am Gehäuse 9 beweglich gelagert und ist im gezeigten Ausführungsbeispiel als Wippe ausgebildet, welche um eine in Montagelage senkrecht verlaufende Achse 55 schwenkbar gelagert ist. Das Schaltelement 15 wird durch eine vorgegebene Kraft des Federelementes 32 (beispielsweise in Form einer Blattfeder) in der ersten Schaltstellung gehalten, sodass der Mitnehmer 30 bei nicht-montierter Ausstoßvorrichtung 8 mit der zweiten Abbiegung 28 der Führungsbahn 26 lösbar verriegelbar ist, wobei ein längerer Einzugsweg des Mitnehmers 30 mit einer größeren Einzugskraft der Federvorrichtung 29 zur Verfügung steht. Das Gehäuse 9 des Möbelantriebes 7 weist zumindest eine in Längsrichtung des Gehäuses 9 verlaufende Führung 56 auf, in welche ein Steg 59 der Ausstoßvorrichtung 8 einschiebbar ist. Die Ausstoßvorrichtung 8 wird also mit dem Steg 59 in die Führung 56 des Möbelantriebes 7 eingeschoben, wobei das Schaltelement 15 um die senkrecht verlaufende Achse 55 verschwenkt wird und damit in die zweite Schaltstellung umschaltbar ist, sodass der Mitnehmer 30 in die erste Abbiegung 27 einfährt. Auf diese Weise steht auch ein verkürzter Einzugsweg des Mitnehmers 30 mit einer reduzierten Einzugskraft der Federvorrichtung 29 zur Verfügung. Wenn der Steg 59 vollständig in die Führung 56 eingeschoben wird, so ist zumindest ein Rastelement 57 (vorzugsweise eine Noppe) des Gehäuses 9 des Möbelantriebes 7 mit einer korrespondierenden Ausnehmung 58 des Steges 58 der Ausstoßvorrichtung 8 lösbar verrastbar. Auf diese Weise ist die Ausstoßvorrichtung 8 mit einer vorgegebenen Haltekraft in Längsrichtung des Gehäuses 9 fixiert.

## Patentansprüche

1. Möbelantrieb (7) zum Einziehen eines bewegbar gelagerten Möbelteiles (3) in eine Schließstellung relativ zu einem Möbelkorpus (2), umfassend:
- ein Gehäuse (9),
- einen Mitnehmer (30), der mit dem bewegbaren Möbelteil (3) lösbar koppelbar ist,
- eine Federvorrichtung (29) zur Kraftbeaufschlagung des Mitnehmers (30),
- wenigstens eine am Gehäuse (9) angeordnete oder ausgebildete Führungsbahn (26), entlang welcher der Mitnehmer (30) verfahrbar gelagert ist, wobei die Führungsbahn (26) eine erste Abbiegung (27) zur lösbaren Verriegelung des Mitnehmers (30) aufweist,
wobei dass die Führungsbahn (26) zumindest eine zweite Abbiegung (28) zur lösbaren Verriegelung des Mitnehmers (30) aufweist, **dadurch gekennzeichnet, dass** zumindest ein bewegbar gelagertes Schaltelement (15) mit einer ersten und mit einer zweiten Schaltstellung vorgesehen ist, wobei das Schaltelement (15) in der ersten Schaltstellung die erste Abbiegung (27) versperrt, sodass der Mitnehmer (30) in die zweite Abbiegung (28) einfahrbar ist und wobei das Schaltelement (15) in der zweiten Schaltstellung die erste Abbiegung (27) freigibt, sodass der Mitnehmer (30) in die erste Abbiegung (27) einfahrbar ist.

2. Möbelantrieb nach Anspruch 1, **dadurch gekennzeichnet, dass** das Schaltelement (15) in der ersten Schaltstellung die erste Abbiegung (27) durch Blockieren versperrt, sodass eine Einfahrt des Mitnehmers (30) in die erste Abbiegung (27) verhindert ist.

3. Möbelantrieb nach Anspruch 1, **dadurch gekennzeichnet, dass** das Schaltelement (15) seitlich neben der Führungsbahn (26) angeordnet ist und in der ersten Schaltstellung den Mitnehmer (30) derart ablenkt, dass eine Einfahrt des Mitnehmers (30) in erste Abbiegung (27) verhindert ist.

4. Möbelantrieb nach einem der Ansprüche 1 bis 3, **dadurch gekennzeichnet, dass** das Schaltelement (15) beweglich am Gehäuse (9) gelagert ist.

5. Möbelantrieb nach einem der Ansprüche 1 bis 4, **dadurch gekennzeichnet, dass** ein von der Federvorrichtung (29) gesondertes Federelement (32) vorgesehen ist, durch welches das Schaltelement (15) in die erste Schaltstellung drückbar ist.

6. Möbelantrieb nach einem der Ansprüche 1 bis 5, **dadurch gekennzeichnet, dass** die erste Abbiegung (27) und die zweite Abbiegung (28) in Längsrichtung des Gehäuses (9) voneinander beabstandet sind.

7. Möbelantrieb nach einem der Ansprüche 1 bis 6, **dadurch gekennzeichnet, dass** die erste Abbiegung (27) und die zweite Abbiegung (28) zumindest abschnittsweise parallel zueinander verlaufen.

8. Möbelantrieb nach einem der Ansprüche 1 bis 7, **dadurch gekennzeichnet, dass** die Federvorrichtung (29) in der Stellung, in welcher der Mitnehmer (30) mit der ersten Abbiegung (27) lösbar verriegelt ist, weniger gespannt ist als in jener Stellung, in welcher der Mitnehmer (30) mit der zweiten Abbiegung (28) lösbar verriegelt ist.

9. Möbelantrieb nach einem der Ansprüche 1 bis 8, **dadurch gekennzeichnet, dass** die Federvorrichtung (29) über einen vom Mitnehmer (30) gesonderten Federhalter (33) spannbar ist, wobei eine Koppelvorrichtung (35) zur Bewegungskopplung zwischen Mitnehmer (30) und Federhalter (33) vorgesehen ist, wobei durch die Koppelvorrichtung (35) die Befestigungsstelle (39b) der Federvorrichtung (29) am Federhalter (33) beim Ausziehen des Mitnehmers (30) gegenüber der Position des verfahrenden Mitnehmers (30) zurückfällt.

10. Möbelantrieb nach Anspruch 9, **dadurch gekennzeichnet, dass** der Mitnehmer (30) mit einem verfahrbaren Schieber (47) verbunden ist, wobei die Koppelvorrichtung (35) einen mit dem Federhalter (33) verbundenen Kippteil (36) mit einer ersten Verzahnung (42) und eine am Schieber (47) angeordnete zweite Verzahnung (43) aufweist, wobei die erste Verzahnung (42) und zweite Verzahnung (42, 43) miteinander in Verbindung stehen.

11. Möbelantrieb nach Anspruch 10, **dadurch gekennzeichnet, dass** der Kippteil (36) entlang einer Steuerkurve (41) geführt ist.

12. Möbelantrieb nach Anspruch 11, **dadurch gekennzeichnet, dass** die Steuerkurve (41) einen ersten Abschnitt (41a) und einen zweiten Abschnitt (41b) aufweist, die über einen Scheitelpunkt (44) der Steuerkurve (41) miteinander verbunden sind.

13. Möbelantrieb nach Anspruch 12, **dadurch gekennzeichnet, dass** der Kippteil (36) in der ersten Schaltstellung des Schaltelementes (15), in der die erste Abbiegung (27) der Führungsbahn (26) versperrt ist, entlang dem ersten Abschnitt (41a) und dem zweiten Abschnitt (41b) der Steuerkurve (41) führbar ist.

14. Möbelantrieb nach Anspruch 12 oder 13, **dadurch gekennzeichnet, dass** der Kippteil (36) in der der zweiten Schaltstellung des Schaltelementes (15), in der die erste Abbiegung (27) der Führungsbahn (26) freigegeben ist, ausschließlich entlang dem ersten Abschnitt (41a) der Steuerkurve (41) führbar ist.

15. Möbelantrieb nach einem der Ansprüche 1 bis 14, **dadurch gekennzeichnet, dass** das Schaltelement (15) durch eine manuelle Betätigung zwischen der ersten und der zweiten Schaltstellung umschaltbar ist.

16. Möbelantrieb nach einem der Ansprüche 1 bis 15, **dadurch gekennzeichnet, dass** das Schaltelement (15) durch die Montage einer - nachträglich mit dem Gehäuse (9) des Möbelantriebes (7) zu verbindenden - Ausstoßvorrichtung (8) zum Ausstoßen des bewegbaren Möbelteiles (3) zwischen der ersten und der zweiten Schaltstellung umschaltbar ist.

17. Anordnung mit einem Möbelantrieb (7) nach einem der Ansprüche 1 bis 16 zum Einziehen eines bewegbar gelagerten Möbelteiles (3) in die geschlossene Endlage und mit einer Ausstoßvorrichtung (8) zum Ausstoßen des bewegbaren Möbelteiles (3) ausgehend von der geschlossenen Endlage in eine Offenstellung.

18. Schubladenausziehführung (4) mit einer an einem Möbelkorpus (2) zu befestigenden Korpusschiene (5), zumindest einer relativ zur Korpusschiene (5) verfahrbar gelagerten Ausziehschiene (6) und mit einem Möbelantrieb (7) nach einem der Ansprüche 1 bis 16 oder mit einer Anordnung nach Anspruch 17.

## Claims

1. A furniture drive (7) for retracting a movably-mounted furniture part (3) into a closed position relative to a furniture carcass (2), including:
- a housing (9),
- an entrainment member (30) which can be releasably coupled to the movable furniture part (3),
- a spring device (29) for applying a force to the entrainment member (30),
- at least one guide path (26) arranged or formed on the housing (9), wherein the entrainment member (30) is displaceably arranged along the guide path (26), wherein the guide path (26) includes a first bend (27) for releasably locking the entrainment member (30), wherein the guide path (26) includes at least one second bend (28) for releasably locking the entrainment member (30),
**characterized in that** at least one movably-supported switch element (15) with a first and with a second switching position is provided, wherein the switch element (15), in the first switching position, blocks the first bend (27) so that the entrainment member (30) can move into the second bend (28) and wherein the switch element (15), in the second switching position, unblocks the first bend (27) so that the entrainment member (30) can move into the first bend (27).

2. The furniture drive according to claim 1, **characterized in that** the switch element (15), in the first switching position, blocks the first bend (27) by obstructing, so that a movement of the entrainment member (30) into the first bend (27) is prevented.

3. The furniture drive according to claim 1, **characterized in that** the switch element (15) is laterally arranged next to the guide path (26) and, in the first switching position, deflects the entrainment member (30) such that a movement of the entrainment member (30) into the first bend (27) is prevented.

4. The furniture drive according to one of the claims 1 to 3, **characterized in that** the switch element (15) is movably mounted on the housing (9).

5. The furniture drive according to one of the claims 1 to 4, **characterized in that** a spring element (32) which is separate from the spring device (29) is provided by which the switch element (15) can be pressed into the first switching position.

6. The furniture drive according to one of the claims 1 to 5, **characterized in that** the first bend (27) and the second bend (28) are spaced from each other in a longitudinal direction of the housing (9).

7. The furniture drive according to one of the claims 1 to 6, **characterized in that** the first bend (27) and the second bend (28) extend parallel to each other at least over a region.

8. The furniture drive according to one of the claims 1 to 7, **characterized in that** the spring device (29) in a position, in which the entrainment member (30) is releasably locked to the first bend (27), is tensioned to a less extent than in a position in which the entrainment member (30) is releasably locked to the second bend (28).

9. The furniture drive according to one of the claims 1 to 8, **characterized in that** the spring device (29) can be tensioned by a spring holder (33) which is separate from the entrainment member (30), wherein a coupling device (35) is provided for motionally coupling between the entrainment member (30) and the spring holder (33), wherein by the coupling device (35), the fastening location (39b) of the spring device (29) on the spring holder (33), when the entrainment member (30) is being pulled out, falls back relative to the position of the moving entrainment member (30).

10. The furniture drive according to claim 9, **characterized in that** the entrainment member (30) is connected to a displaceable slider (47), wherein the coupling device (35) includes a tilting portion (36) which is connected to the spring holder (33), the tilting portion (36) has a first tooth arrangement (42), the coupling device (35) further includes a second tooth arrangement (43) arranged on the slider (47), wherein the first tooth arrangement (42) and the second tooth arrangement (43) are connected with one another.

11. The furniture drive according to claim 10, **characterized in that** the tilting portion (36) is guided along a control curve (41).

12. The furniture drive according to claim 11, **characterized in that** the control curve (41) includes a first section (41a) and a second section (41b) which are connected to one another by an apex portion (44) of the control curve (41).

13. The furniture drive according to claim 12, **characterized in that** the tilting portion (36), in the first switching position of the switch element (15) in which the first bend (27) of the guide path (26) is blocked, can be guided along the first section (41a) and along the second section (41b) of the control curve (41).

14. The furniture drive according to claim 12 or 13, **characterized in that** the tilting portion (36), in the second switching position of the switch element (15) in which the first bend (27) of the guide path (26) is unblocked, can be guided exclusively along the first section (41a) of the control curve (41).

15. The furniture drive according to one of the claims 1 to 14, **characterized in that** the switch element (15) can be switched by a manual actuation between the first and second switching position.

16. The furniture drive according to one of the claims 1 to 15, **characterized in that** the switch element (15) can be switched between the first and second switching position by mounting an ejection device (8) for ejecting the movable furniture part (3), wherein the ejection device (8) is to be retrofitted to the housing (9) of the furniture drive (7).

17. An arrangement having a furniture drive (7) according to one of the claims 1 to 16 for retracting a movably-mounted furniture part (3) into the closed end position and with an ejection device (8) for ejecting the movable furniture part (3), starting from the closed end position, towards an open position.

18. A drawer pull-out guide (4) with a carcass rail (5) to be fixed to a furniture carcass (2), at least one extension rail (6) displaceably mounted relative to the carcass rail (5) and with a furniture drive (7) according to one of the claims 1 to 16 or with an arrangement according to claim 17.

## Revendications

1. Entraînement de meuble (7) pour rentrer une partie de meuble mobile logée de façon déplaçable (3) dans une position fermée par rapport à un corps de meuble (2), comprenant :
- un boîtier (9),
- un élément d'entraînement (30), qui peut être couplé de façon détachable à la partie de meuble mobile (3),
- un dispositif formant ressort (29) pour soumettre à une force l'élément d'entraînement (30),
- au moins une glissière de guidage (26) disposée ou conçue sur le boîtier (9), le long de laquelle l'élément d'entraînement (30) est logé de façon déplaçable, dans lequel la glissière de guidage (26) présente une première courbure (27) pour le verrouillage détachable de l'élément d'entraînement (30), dans lequel la glissière de guidage (26) présente au moins une deuxième courbure (28) pour le verrouillage détachable de l'élément d'entraînement (30),
**caractérisé en ce qu'**est prévu au moins un élément de commutation (15) logé de façon mobile avec une première et avec une deuxième position de commutation, dans lequel l'élément de commutation (15) dans la première position de commutation bloque la première courbure (27), de sorte que l'élément d'entraînement (30) peut pénétrer dans la deuxième courbure (28) et dans lequel l'élément de commutation (15) dans la deuxième position de commutation libère la première courbure (27), de sorte que l'élément d'entraînement (30) peut pénétrer dans la première courbure (27).

2. Entraînement de meuble selon la revendication 1, **caractérisé en ce que** l'élément de commutation (15) dans la première position de commutation obstrue par blocage la première courbure (27), de sorte qu'une entrée de l'élément d'entraînement (30) dans la première courbure (27) est empêchée.

3. Entraînement de meuble selon la revendication 1, **caractérisé en ce que** l'élément de commutation (15) est disposé latéralement à côté de la glissière de guidage (26) et dans la première position de commutation dévie l'élément d'entraînement (30) de manière telle qu'une entrée de l'élément d'entraînement (30) dans la première courbure (27) est empêchée.

4. Entraînement de meuble selon l'une des revendications 1 à 3, **caractérisé en ce que** l'élément de commutation (15) est logé de façon mobile sur le boîtier (9).

5. Entraînement de meuble selon l'une des revendications 1 à 4, **caractérisé en ce qu'**un élément formant ressort (32) distinct du dispositif formant ressort (29) est prévu, par lequel l'élément de commutation (15) peut être comprimé dans la première position de commutation.

6. Entraînement de meuble selon l'une des revendications 1 à 5, **caractérisé en ce que** la première courbure (27) et la deuxième courbure (28) sont espacées l'une de l'autre dans le sens longitudinal du boîtier (9).

7. Entraînement de meuble selon l'une des revendications 1 à 6, **caractérisé en ce que** la première courbure (27) et la deuxième courbure (28) passent au moins par endroits parallèlement l'une à l'autre.

8. Entraînement de meuble selon l'une des revendications 1 à 7, **caractérisé en ce que** le dispositif formant ressort (29) dans la position dans laquelle l'élément d'entraînement (30) est verrouillé de façon détachable avec la première courbure (27), est moins tendu que dans la position dans laquelle l'élément d'entraînement (30) est verrouillé de façon détachable avec la deuxième courbure (28).

9. Entraînement de meuble selon l'une des revendications 1 à 8, **caractérisé en ce que** le dispositif formant ressort (29) peut être tendu sur un porte-ressort (33) distinct de l'élément d'entraînement (30), dans lequel un dispositif de couplage (35) est prévu pour le couplage de mouvement entre l'élément d'entraînement (30) et le porte-ressort (33), dans lequel du fait du dispositif de couplage (35), le point de fixation (39b) du dispositif formant ressort (29) au porte-ressort (33) recule lors de l'extraction de l'élément d'entraînement (30) par rapport à la position de l'élément d'entraînement en mouvement (30).

10. Entraînement de meuble selon la revendication 9, **caractérisé en ce que** l'élément d'entraînement (30) est relié à un coulisseau déplaçable (47), dans lequel le dispositif de couplage (35) présente une partie basculante (36) reliée au porte-ressort (33) avec une première denture (42) et une deuxième denture (43) disposée sur le coulisseau (47), dans lequel la première denture (42) et la deuxième denture (42, 43) sont reliées ensemble.

11. Entraînement de meuble selon la revendication 10, **caractérisé en ce que** la partie basculante (36) est guidée le long d'une came de commande (41).

12. Entraînement de meuble selon la revendication 11, **caractérisé en ce que** la came de commande (41) présente une première section (41a) et une deuxième section (41b), qui sont reliées ensemble par un sommet (44) de la came de commande (41).

13. Entraînement de meuble selon la revendication 12, **caractérisé en ce que** la partie basculante (36) dans la première position de commutation de l'élément de commutation (15), dans laquelle la première courbure (27) de la glissière de guidage (26) est obstruée, peut être guidée le long de la première section (41a) et de la deuxième section (41b) de la came de commande (41).

14. Entraînement de meuble selon la revendication 12 ou 13, **caractérisé en ce que** la partie basculante (36) dans la deuxième position de commutation de l'élément de commutation (15), dans laquelle la première courbure (27) de la glissière de guidage (26) est libérée, peut être guidée exclusivement le long de la première section (41a) de la came de commande (41).

15. Entraînement de meuble selon l'une des revendications 1 à 14, **caractérisé en ce que** l'élément de commutation (15) est réversible par un actionnement manuel entre la première et la deuxième position de commutation.

16. Entraînement de meuble selon l'une des revendications 1 à 15, **caractérisé en ce que** l'élément de commutation (15) est réversible entre la première et la deuxième position de commutation par le montage d'un dispositif éjecteur (8) - devant être relié ultérieurement avec le boîtier (9) de l'entraînement de meuble (7) - destiné à éjecter la partie de meuble mobile (3).

17. Dispositif avec un entraînement de meuble (7) selon l'une des revendications 1 à 16 pour rentrer une partie de meuble mobile logée de façon déplaçable (3) dans la position finale fermée et avec un dispositif éjecteur (8) destiné à éjecter la partie de meuble mobile (3) à partir de la position finale fermée dans une position ouverte.

18. Glissière de guidage de tiroir (4) avec un rail de corps (5) devant être fixé à un corps de meuble (2), au moins un rail d'extraction (6) logé de façon déplaçable par rapport au rail de corps (5) et avec un entraînement de meuble (7) selon l'une des revendications 1 à 16 ou avec un dispositif selon la revendication 17.
